# EUROPÄISCHE PATENTSCHRIFT

(11) **EP 2 521 846 B1**
(45) Veröffentlichungstag und Bekanntmachung des Hinweises auf die Patenterteilung: **26.11.2014**
(21) Anmeldenummer: 10787452.1
(22) Anmeldetag: 06.12.2010
(51) Int. Cl.: F02B 37/18

(54) **GETRIEBEANORDNUNG SOWIE ABGASTURBOLADER**
TRANSMISSION ARRANGEMENT AND TURBO CHARGER
AGENCEMENT DE TRANSMISSION ET TURBOCOMPRESSEUR

(30) Priorität: 05.01.2010 DE 102010000688
(43) Veröffentlichungstag der Anmeldung: 14.11.2012
(73) Patentinhaber: Robert Bosch GmbH, 70442 Stuttgart (DE)
(72) Erfinder: BAEUERLE, Michael, 71735 Eberdingen (DE); NAU, Michael, 72175 Dornhan/Aischfeld (DE)
(86) Internationale Anmeldenummer: PCT/EP2010/068987
(87) Internationale Veröffentlichungsnummer: WO 2011/082917

(56) Entgegenhaltungen:
- WO-A1-03/029632
- WO-A1-03/029679
- DE-A1-102008 014 609

## Beschreibung

Die Erfindung betrifft eine Getriebeanordnung für eine Verstelleinrichtung, insbesondere eines Wastegates eines Abgasturboladers, mit einem Viergelenk-Koppelgetriebe, welches über eine über ein Getriebe mit einem Antrieb wirkverbundene Antriebsschwinge, eine Abtriebsschwinge und eine die Antriebsschwinge und die Abtriebsschwinge wirkverbindende Koppel verfügt, wobei das Getriebe ein dem Antrieb zugeordnetes Antriebsrad und ein der Antriebsschwinge zugeordnetes, mit dem Antriebsrad zusammenwirkendes Abtriebsrad aufweist. Die Erfindung betrifft weiterhin einen Abgasturbolader.

### Stand der Technik

Abgasturbolader mit einem Wastegate, welche mittels einer Verstelleinrichtung beziehungsweise eines Stellantriebs verstellbar sind, sind aus dem Stand der Technik bekannt. Der Stellantrieb kann beispielsweise als pneumatischer Stellantrieb ausgeführt sein. Alternativ kann die Ansteuerung beziehungsweise Verstellung des Wastegates jedoch auch mittels eines elektrischen Stellantriebs erfolgen. Gegenüber den pneumatischen Stellantrieben sind mit diesen erheblich größere Stellkräfte bereitstellbar. Dabei werden üblicherweise dauerhaft Werte bis etwa 250 N erreicht, welche zum optimierten Dichthalten des Wastegates in dessen Geschlossenstellung erforderlich sind. Ist der elektrische Stellantrieb ein Drehsteller, so erfolgt die Kraftübertragung häufig über ein Viergelenk-Koppelgetriebe beziehungsweise über einen Viergelenktrieb. Das Viergelenk-Koppelgetriebe verfügt über die Antriebsschwinge, die Abtriebsschwinge und die Koppel, über welche die Antriebsschwinge mit der Abtriebsschwinge wirkverbunden ist. Die Antriebsschwinge kann unmittelbar oder über das Getriebe mit dem Antrieb wirkverbunden sein. Das Getriebe weist dabei das Antriebsrad und das Abtriebsrad auf, welche miteinander zur Übertragung eines Drehmoments von dem Antrieb auf die Antriebsschwinge zusammenwirken. Das Antriebsrad ist dem Antrieb und das Abtriebsrad der Antriebsschwinge zugeordnet.

Das Viergelenk-Koppelgetriebe ist üblicherweise derart ausgelegt, dass sich die Antriebsschwinge in der Geschlossenstellung des Wastegates im Bereich einer Strecklage befindet. Um Verschleiß und Drifterscheinungen in einem Dauerbetrieb des Viergelenk-Koppelgetriebes, der Verstelleinrichtung und/oder des Wastegates ausgleichen zu können, kann jedoch auch eine Beabstandung der Antriebsschwinge von der Strecklage in der Geschlossenstellung des Wastegates vorgesehen sein. Unter Strecklage ist dabei die Stellung der Antriebsschwinge zu verstehen, bei welcher eine gedachte Gerade zwischen einer Antriebslagerstelle (in welcher die Antriebsschwinge mit dem Antrieb wirkverbunden ist) und einer Verbindungsstelle zwischen der Antriebsschwinge und der Koppel mit der Koppel beziehungsweise einer gedachten Geraden zwischen den Verbindungspunkten der Koppel mit Antriebsschwinge und Abtriebsschwinge im Wesentlichen fluchtet, also quasi eine Verlängerung für diese darstellt. Der Drehwinkelstellungsbereich, in welchem die Antriebsschwinge in der Geschlossenstellung des Wastegates vorliegt, kann auch als Verschleißbereich bezeichnet werden, da dieser, wie vorstehend beschrieben, zum Ausgleich von Verschleiß beziehungsweise Drifterscheinungen vorgehalten wird.

Je näher die Stellung der Antriebsschwinge der Strecklage in der Geschlossenstellung des Wastegates ist, umso geringer ist das Drehmoment, welches zum Halten der Geschlossenstellung an der Antriebslagerstelle beziehungsweise von dem Antrieb auf die Antriebsschwinge aufgebracht werden muss. Umgekehrt bedeutet dies jedoch auch, dass die auf die Koppel mittels der Antriebsschwinge aufbringbare Verstellkraft ansteigt, wenn sich die Antriebsschwinge der Strecklage nähert. Das bedeutet, dass die an der Koppel generierbare Verstellkraft in dem Verschleißbereich - infolge Annäherung an die Strecklage - eine auf die Koppel wirkende zulässige Verstellkraft der zu verstellenden Einrichtung, beispielsweise des Abgasturboladers, überschreitet. Dies kann zu einer Beschädigung der Einrichtung führen.

Aus dem Stand der Technik sind beispielsweise die DE 10 2009 051 623.9, die DE 10 2005 028 372 A1, die DE 102 45 193 A1 und die DE 10 2008 014609 A bekannt. Die DE 10 2009 051 623.9 beschreibt eine Stelleinrichtung für eine Ventilklappe, mit einem Viergelenktrieb, der einen mittels eines Stellers mittelbar oder unmittelbar verdrehbaren ersten Schwenkarm aufweist, an dessen freien Ende ein Übertragungsglied drehbeweglich gelagert ist. Das Übertragungsglied betätigt einen die Ventilklappe verstellenden zweiten Schwenkarm, der an seinem freien Ende gleichfalls drehbeweglich mit dem Übertragungsglied verbunden ist. Dabei sind elastische Mittel vorgesehen, die in einer Strecklage des Viergelenktriebs, in welcher eine Längsachse des ersten Schwenkarms im Wesentlichen parallel zu dem Übertragungsglied verläuft, die in dieser Lage an einen Anschlag gestellte und geschlossene Ventilklappe mit einer Spannkraft beaufschlagen. Die elastischen Mittel sind dabei als Federdose beziehungsweise Federspeicher ausgebildet. Die Mittel sind zwischen die beiden Teile eines zweiteiligen Übertragungsglieds geschaltet. Die DE 10 2005 028 372 A1 betrifft einen Steller für ein Stellorgan, mit einem elektrischen Stellmotor, mit einer das Stellorgan verstellenden Verstellwelle und mit einem zwischen Stellmotor und Stellwelle angeordneten Getriebe, das eine Getriebe-Eingangsstufe mit einem vom Stellmotor antreibbaren ersten Zahnrad und einem damit kämmenden zweiten Zahnrad aufweist. Jedes der beiden Zahnräder soll mindestens zwei mit Zahnversatz axial nebeneinander angeordnete Verzahnungen mit gleichen Teilkreisdurchmessern aufweisen. Ebenfalls ist vorgesehen, dass jeweils eine der Verzahnungen am ersten Zahnrad mit einer der Verzahnungen am zweiten Zahnrad in Zahneingriff steht. Die DE 102 45 193 A1 betrifft schließlich eine Stelleinheit mit einem Stellergehäuse. Die Stelleinheit umfasst ein Übersetzungsgetriebe mit einem Räderpaar, wobei ein stellmotorseitiges Rad zwischen seinem ersten Eingriffende und seinem zweiten Eingriffende einen sich ändernden stellmotorseitigen Wälzkurvenradius und ein drosselkörperseitiges Rad zwischen seinem ersten Eingriffende und seinem zweiten Eingriffende einen zum stellmotorseitigen Wälzkurvenradius sich komplementär ändernden drosselkörperseitigen Wälzkurvenradius haben. Die DE 10 2008 0 14609 A zeigt eine Kombination aus Rädergetriebe und Koppelgetriebe wobei elastische Mittel vorgesehen sind.

### Offenbarung der Erfindung

Gegenüber den aus dem Stand der Technik bekannten Getriebeanordnungen weist die Getriebeanordnung mit den in Anspruch 1 genannten Merkmalen den Vorteil auf, dass das Übersteigen der zulässigen Verstellkraft der zu verstellenden Einrichtung vermieden wird. Dies wird erfindungsgemäß erreicht, indem das Antriebsrad einen sich über den Umfang ändernden Wälzkurvenradius und das Abtriebsrad einen zu diesem komplementär verlaufenden Wälzkurvenradius aufweisen, wobei die Wälzkurvenradien in einem Drehwinkelbereich um die Strecklage des Viergelenk-Koppelgetriebes zur Ausbildung einer ersten Übersetzung des Getriebes und außerhalb des Drehwinkelbereichs zur Ausbildung mindestens einer zweiten, zur ersten Übersetzung größeren Übersetzung gewählt sind. Unter einer größeren Übersetzung wird dabei verstanden, dass das Verhältnis von an dem Abtriebsrad anliegendem Drehmoment zu an dem Antriebsrad anliegenden Drehmoment größer ist. Das Getriebe weist somit einen über die Drehwinkelstellung des Antriebsrads beziehungsweise des Abtriebsrads veränderliche Übersetzung auf. Der Wälzkurvenradius des Antriebsrads und der Wälzkurvenradius des Abtriebsrads sind derart aufeinander abgestimmt, dass Antriebsrad und Abtriebsrad in jeder Drehwinkelstellung zum Übertragen des Drehmoments von Antrieb auf Antriebsschwinge zusammenwirken. Sind Antriebsrad und Abtriebsrad als Zahnräder ausgebildet, so sind die Wälzkurvenradien derart zu wählen, dass die Zahnräder in jeder Drehwinkelstellung miteinander in Eingriff stehen. Durch entsprechende Wahl der Wälzkurvenradien ist die Übersetzung in dem Drehwinkelbereich um die Strecklage des Viergelenk-Koppelgetriebes kleiner als außerhalb des Drehwinkelbereichs. Somit wird erreicht, dass trotz gleichbleibendem Drehmoment des Antriebs die auf die Koppel aufgeprägte Verstellkraft die zulässige Verstellkraft nicht überschreitet. Auf diese Weise werden Beschädigungen der Getriebeanordnung, der Verstelleinrichtung und/oder des Abgasturboladers vermieden. Die erste Übersetzung muss jedoch nicht über den gesamten Drehwinkelbereich vorliegen. Vielmehr kann sie lediglich in einem Teilbereich des Drehwinkelbereichs vorgesehen sein beziehungsweise einer bestimmten Drehwinkelstellung zugeordnet sein. Vorteilhafterweise ist die erste Übersetzung die kleinste Übersetzung, welche zwischen dem Antriebsrad und dem Abtriebsrad vorliegt. Weitere Übersetzungen in dem Drehwinkelbereich und außerhalb des Drehwinkelbereichs sind also größer als die erste Übersetzung.

Vorzugsweise ist eine stetige Veränderung der Übersetzung über die Drehwinkelstellung vorgesehen. Das bedeutet, dass die erste Übersetzung in der Drehwinkelstellung des Antriebsrads vorliegt, in welcher sich das Viergelenk-Koppelgetriebe in seiner Strecklage befindet. Ausgehend von der ersten Übersetzung steigt die Übersetzung des Getriebes stetig an, wobei beispielsweise ein linearer Anstieg oder ein einer beliebigen anderen Gesetzmäßigkeit folgender Anstieg vorgesehen sein kann. Aus der vorstehend beschriebenen Ausführung der Getriebeanordnung ergibt sich der Vorteil, dass die Stellzeit der Verstelleinrichtung reduziert werden kann, weil die mittlere Übersetzung des Getriebes sinkt. Das bedeutet, dass der Antrieb eine geringere Anzahl an Umdrehungen beschreiben muss, um dieselbe Stellwirkung wie bei aus dem Stand der Technik bekannten Verstelleinrichtungen zu erreichen, also beispielsweise das Wastegate des Abgasturboladers von seiner Offenstellung in seine Geschlossenstellung zu verlagern. Ebenso wird, wie bereits vorstehend beschrieben, die zu verstellende Einrichtung vor unzulässig hohen Verstellkräften geschützt.

Eine Weiterbildung der Erfindung sieht vor, dass das Antriebsrad und das Abtriebsrad als Zahnräder ausgebildet sind. Damit ist eine zuverlässige Übertragung des Drehmoments von dem Antrieb auf die Antriebsschwinge gewährleistet. Die Wälzkurvenradien der Zahnräder sind dabei derart aufeinander abzustimmen, dass stets das Ineinandereingreifen der Zahnräder gewährleistet ist. Vorteilhafterweise sind die Wälzkurvenradien derart gewählt, dass ein möglichst geringer Verschleiß der Zahnräder auftritt. Die Zahnräder liegen beispielsweise als Stirnräder vor und können dabei eine Evolventenverzahnung oder Wildhaber-Novikov-Verzahnung aufweisen.

Eine Weiterbildung der Erfindung sieht vor, dass die Wälzkurvenradien derart gewählt sind, dass für jede Drehwinkelstellung des Antriebsrads und/oder Abtriebsrads eine bestimmte Übersetzung des Getriebes vorliegt und/oder bei einem bestimmten, mit dem Antrieb erzeugten Antriebsmoment ein bestimmtes Stellmoment an der Abtriebsschwinge erzielbar ist. Die Übersetzung wird dabei mittels der Wälzkurvenradien von Antriebsrad und Abtriebsrad bestimmt. Durch entsprechende Wahl der Wälzkurvenradien kann somit für jede Drehwinkelstellung jeweils eine zugehörige, bestimmte Übersetzung eingestellt werden. Wie bereits vorstehend beschrieben, wird dabei vorteilhafterweise eine stetige Veränderung der Übersetzung gewählt, wobei die kleinste Übersetzung in dem Drehwinkelbereich vorliegt, in welchem sich das Viergelenk-Koppelgetriebe in seiner Strecklage befindet. Die Wahl der Wälzkurvenreihen kann dabei derart erfolgen, dass mit dem bestimmten, insbesondere konstanten, Antriebsmoment das bestimmte, insbesondere konstante, Stellmoment an der Antriebsschwinge erreicht wird.

Eine Weiterbildung der Erfindung sieht vor, dass das Antriebsrad und/oder das Abtriebsrad einen Wälzwinkel von kleiner als oder gleich 360° aufweisen. Der Wälzwinkel ist der Winkel, welcher zwischen den Drehwinkelstellungen liegt, die beispielsweise in der Offenstellung beziehungsweise der Geschlossenstellung des Wastegates vorliegen. Der Wälzwinkel ist also die Differenz zwischen Enddrehwinkelstellungen, die von dem Antriebsrad beziehungsweise dem Abtriebsrad eingenommen werden können. Ist der Wälzwinkel kleiner als 360°, so treten Antriebsrad beziehungsweise Abtriebsrad nur über einen Teilbereich ihres Umfangs miteinander in Wirkverbindung.

Eine Weiterbildung der Erfindung sieht vor, dass die erste Übersetzung eine Minimalübersetzung ist. Das bedeutet, dass die Wälzkurvenradien derart gewählt sind, dass die erste Übersetzung die kleinste Übersetzung des Getriebes ist. Ausgehend von der ersten Übersetzung, welche in dem Drehwinkelbereich um die Strecklage des Viergelenk-Koppelgetriebes vorliegt, ist also lediglich eine Zunahme beziehungsweise ein Konstantbleiben der Übersetzung vorgesehen.

Eine Weiterbildung der Erfindung sieht vor, dass außerhalb des genannten, also strecklagennahen Drehwinkelbereichs eine dritte Übersetzung vorgesehen ist, welche kleiner als die zweite Übersetzung ist. Ausgehend von der ersten Übersetzung steigt die Übersetzung also bis hin zu der zweiten Übersetzung an. Anschließend ist es vorgesehen, dass die Übersetzung kleiner wird, bis eine dritte Übersetzung erreicht ist, die kleiner als die zweite Übersetzung ist. Dabei kann es vorgesehen sein, dass die zweite Übersetzung eine maximale Übersetzung ist, also die größte in dem Getriebe vorliegende Übersetzung. In allen Ausführungsformen der Getriebeanordnung ist es vorgesehen, dass die dritte Übersetzung kleiner als die zweite, aber größer als die erste Übersetzung ist. Alternativ kann es jedoch auch vorgesehen sein, dass die dritte Übersetzung kleiner als die erste Übersetzung ist. Der Verlauf der Übersetzung zwischen der ersten, der zweiten und/oder der dritten Übersetzung kann prinzipiell beliebig gewählt sein.

Eine Weiterbildung der Erfindung sieht vor, dass die Antriebsschwinge drehfest mit dem Abtriebsrad verbunden und insbesondere mit diesem in einem gemeinsamen Lager gelagert ist. Das Abtriebsrad des Getriebes wirkt demnach unmittelbar auf die Antriebsschwinge, es ist kein weiteres Getriebe zwischen diesen beiden Elementen vorgesehen. Bei einer solchen Ausgestaltung der Getriebeanordnung ist es besonders vorteilhaft, wenn Antriebsschwinge und Abtriebsrad in dem gemeinsamen Lager gelagert sind.

Eine Weiterbildung der Erfindung sieht vor, dass die Antriebsschwinge und das Abtriebsrad einteilig ausgeführt sind. Bei einer solchen Ausführungsform liegt demnach eine stoffschlüssige Verbindung zwischen den beiden Elementen vor.

Die Erfindung betrifft weiterhin einen Abgasturbolader mit einem Wastegate und einer Verstelleinrichtung zum Verstellen des Wastegates, wobei die Verstelleinrichtung eine Getriebeanordnung, insbesondere gemäß den vorstehenden Ausführungen, mit einem Viergelenk-Koppelgetriebe aufweist, wobei das Viergelenk-Koppelgetriebe über eine über ein Getriebe mit einem Antrieb wirkverbundene Antriebsschwinge, eine Abtriebsschwinge und eine die Antriebsschwinge und die Abtriebsschwinge wirkverbindende Koppel verfügt, wobei das Getriebe ein dem Antrieb zugeordnetes Antriebsrad und ein der Antriebsschwinge zugeordnetes, mit dem Antriebsrad zusammenwirkendes Abtriebsrad aufweist. Dabei ist vorgesehen, dass das Antriebsrad einen sich über den Umfang ändernden Wälzkurvenradius und das Abtriebsrad einen zu diesem komplementär verlaufenden Wälzkurvenradius aufweisen, wobei die Wälzkurvenradien in einem Drehwinkelbereich um die Strecklage des Viergelenk-Koppelgetriebes zumindest bereichsweise zur Ausbildung einer ersten Übersetzung des Getriebes und außerhalb des Drehwinkelbereichs zur Ausbildung mindestens einer zweiten, zur ersten Übersetzung größeren Übersetzung gewählt sind. Die Getriebeanordnung kann gemäß den vorstehenden Ausführungen weitergebildet sein.

Eine Weiterbildung der Erfindung sieht vor, dass der Antrieb an einem Verdichtergehäuse des Abgasturboladers und das Wastegate an einem Turbinengehäuse des Abgasturboladers vorgesehen sind. Die Anordnung des Antriebs an dem Verdichtergehäuse ist aus thermischen Gründen vorgesehen. Das Wastegate dagegen muss auf der heißen Turbinenseite an dem Turbinengehäuse angeordnet sein. Bei einem Betrieb der Verstelleinrichtung liegt somit ein Lastabtrag zwischen dem Verdichtergehäuse und dem Turbinengehäuse des Abgasturboladers vor. Der Lastabtrag entspricht dabei der über die Koppel des Viergelenk-Koppelgetriebes übertragenen Verstellkraft. Bei der Verwendung eines nicht erfindungsgemäßen Abgasturboladers kann dabei der Fall auftreten, dass der Lastabtrag unzulässig groß wird, sodass der Abgasturbolader möglicherweise beschädigt wird. Dies wird durch die entsprechende Wahl der Wälzkurvenradien von Antriebsrad und Abtriebsrad des Getriebes vermieden, da auf diese Weise die über die Koppel übertragene Verstellkraft und damit auch der Lastabtrag auf die zulässige Verstellkraft beschränkt wird.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine schematische Darstellung einer Getriebeanordnung mit einem Viergelenk-Koppelgetriebe, wobei sich eine Antriebsschwinge in einer Strecklage befindet,
- Figur 2: ein der Antriebsschwinge zugeordnetes Getriebe der Getriebeanordnung in einer schematischen Ansicht,
- Figur 3: ein Diagramm, in welchem eine Übersetzung des Getriebes über einer Drehwinkelstellung des Abtriebsrads dargestellt ist, und
- Figur 4: ein Diagramm, in welchem Wälzkurven der Antriebsschwinge und einer Abtriebsschwinge des Getriebes dargestellt sind.

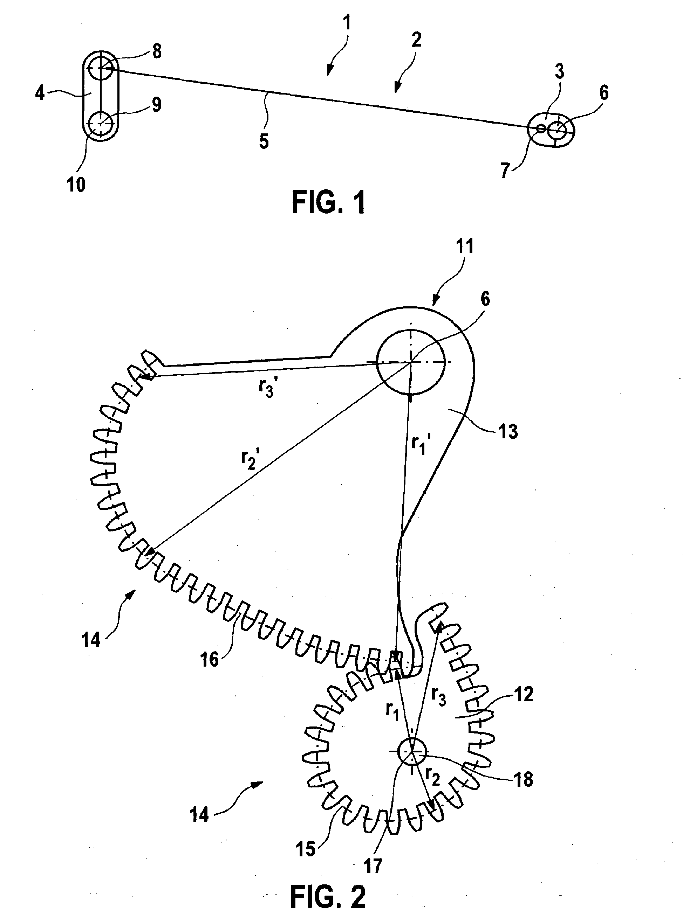

Die Figur 1 zeigt eine schematische Ansicht einer Getriebeanordnung 1 mit einem Viergelenk-Koppelgetriebe 2. Ein solches Viergelenk-Koppelgetriebe 2 wird beispielsweise für eine hier nicht dargestellte Verstelleinrichtung eines Wastegates eines Abgasturboladers verwendet. Die Verstelleinrichtung ist dabei eine elektrisch betätigte Verstelleinrichtung, verfügt also über einen elektrischen Steller beziehungsweise elektrischen Antrieb. Das Viergelenk-Koppelgetriebe 2 weist eine Antriebsschwinge 3, eine Abtriebsschwinge 4 und eine die Antriebsschwinge 3 und die Abtriebsschwinge 4 wirkverbindende Koppel 5 auf. Die Antriebsschwinge 3 ist dabei um eine Lagerstelle 6 drehbar gelagert. An dieser Lagerstelle 6 ist sie mit einem hier nicht dargestellten Getriebe 11 wirkverbunden. Die Koppel 5 ist an einer Koppellagerstelle 7 drehbar an der Antriebsschwinge 2 gelagert. An der Antriebsschwinge 4 ist eine weitere Koppellagerstelle 8 vorgesehen, in welcher die Koppel 5 an der Abtriebsschwinge 4 drehbar gelagert ist. Die Abtriebsschwinge 4 ist um eine Abtriebslagerstelle 9 drehbar gelagert und dazu vorzugsweise auf einer Abtriebswelle 10 befestigt. Über die Abtriebswelle 10 ist eine Wirkverbindung zwischen der Abtriebsschwinge 4 und dem Wastegate des Abgasturboladers hergestellt. Die Getriebeanordnung 1 beziehungsweise das Viergelenk-Koppelgetriebe 2, welches hier dargestellt ist, ist also Bestandteil der Verstelleinrichtung des Wastegates.

Die Antriebsschwinge 3 ist in der Figur 1 in einer Drehwinkelstellung dargestellt, in welcher das Viergelenk-Koppelgetriebe 2 in seiner Strecklage vorliegt. In dieser bildet eine gedachte Gerade zwischen der Lagerstelle 6 und der Koppellagerstelle 7 im Wesentlichen eine Verlängerung einer gedachten Geraden zwischen den Koppellagerstellen 7 und 8. Die Abtriebsschwinge 4 liegt dabei in einer Drehwinkelstellung vor, in welcher sich das Wastegate des Abgasturboladers in seiner Geschlossenstellung befindet. Die dargestellte Drehwinkelstellung der Abtriebsschwinge 4 kann daher ebenfalls als Geschlossenstellung bezeichnet werden. Soll die Abtriebsschwinge 4 in dieser Drehwinkelstellung gehalten werden, so ist die dargestellte Strecklage der Antriebsschwinge 3 besonders vorteilhaft, da in dieser das von einem Antrieb (nicht dargestellt) aufzubringende Drehmoment sehr klein oder gleich Null ist. Es ist somit mit einem sehr geringen Energieaufwand möglich, die Abtriebsschwinge 4 in der Geschlossenstellung zu halten. Die in der Figur 1 dargestellte Stellung des Viergelenk-Koppelgetriebes 2 in seiner Strecklage wird zweckmäßigerweise nur bei Erreichen des maximalen Verschleißes und/oder eines maximalen Temperatur-Drifts erreicht beziehungsweise eingestellt. Vorzugsweise ist das Viergelenk-Koppelgetriebe 2 derart ausgebildet, dass in der Geschlossenstellung der Abtriebsschwinge 4 die Strecklage (noch) nicht erreicht ist, so dass ein Reserve-Drehwinkelbereich zum Nachstellen beziehungsweise zum Kompensieren von Verschleiß, Toleranzen und/oder Temperatur-Drift zur Verfügung steht.

Aus der Darstellung der Figur 1 ergibt sich, dass auf die Koppel 5 im Bereich der Strecklage mittels der Antriebsschwinge 3 unter Aufwendung eines vergleichsweise geringen Drehmoments des Antriebs eine sehr große Verstellraft aufbringbar ist. Insbesondere weil üblicherweise der Antrieb an einem Verdichtergehäuse des Abgasturboladers und das Wastegate in einem Turbinengehäuse des Abgasturboladers vorgesehen sind, ist es jedoch notwendig, die über die Koppel 5 übertragene Verstellkraft auf einen zulässigen Wert zu begrenzen.

Dies wird erreicht, indem die Antriebsschwinge 3 über das in der Figur 2 dargestelltes Getriebe 11 mit dem Antrieb verbunden wird. Das Getriebe weist ein Antriebsrad 12 und ein Abtriebsrad 13 auf. Beide sind als Zahnräder 14 ausgeführt, weisen also eine Zahnung auf. Das Antriebsrad 12 ist dem Antrieb, das Abtriebsrad 13 der Antriebsschwinge 3 zugeordnet. Üblicherweise ist dabei die Antriebsschwinge 3 drehfest mit dem Abtriebsrad 13 verbunden. Idealerweise sind sie in einem gemeinsamen Lager der Lagerstelle 6 gelagert. Das Antriebsrad 12 wirkt mit dem Abtriebsrad 13 zur Übertragung des von dem Antrieb bereitgestellten Drehmoments auf die Antriebsschwinge 3 zusammen. Zu diesem Zweck stehen die Zahnungen von Antriebsrad 12 und Abtriebsrad 13 miteinander in Eingriff. Wie in der Figur 2 erkennbar, weisen sowohl das Antriebsrad 12 als auch das Abtriebsrad 13 jeweils einen sich über den Umfang ändernden Wälzkurvenradius auf. Für das Antriebsrad 12 ist dies mittels einer Wälzkurve 15 und für das Abtriebsrad 13 mittels einer Wälzkurve 16 dargestellt. In dem Bereich, in welchem die Zahnungen von Antriebsrad 12 und Abtriebsrad 13 miteinander in Eingriff stehen, fallen die Wälzkurven 15 und 16 zusammen. Erkennbar ist auch, dass der Wälzkurvenradius des Abtriebsrads 13 komplementär zu dem Wälzkurvenradius des Antriebsrads 12 verläuft. Auf diese Weise wird sichergestellt, dass die Zahnungen stets miteinander in Eingriff stehen. Das Antriebsrad 12 ist in einer Lagerstelle 17 mit dem Antrieb verbunden, beispielsweise indem das Antriebsrad 12 an einer Welle 18 des Antriebs befestigt ist. Das Abtriebsrad 13 ist dagegen gemeinsam mit der Antriebsschwinge 3 in der Lagerstelle 6 gelagert. Die Lagerstelle 6 und die Lagerstelle 17 sind ortsfest.

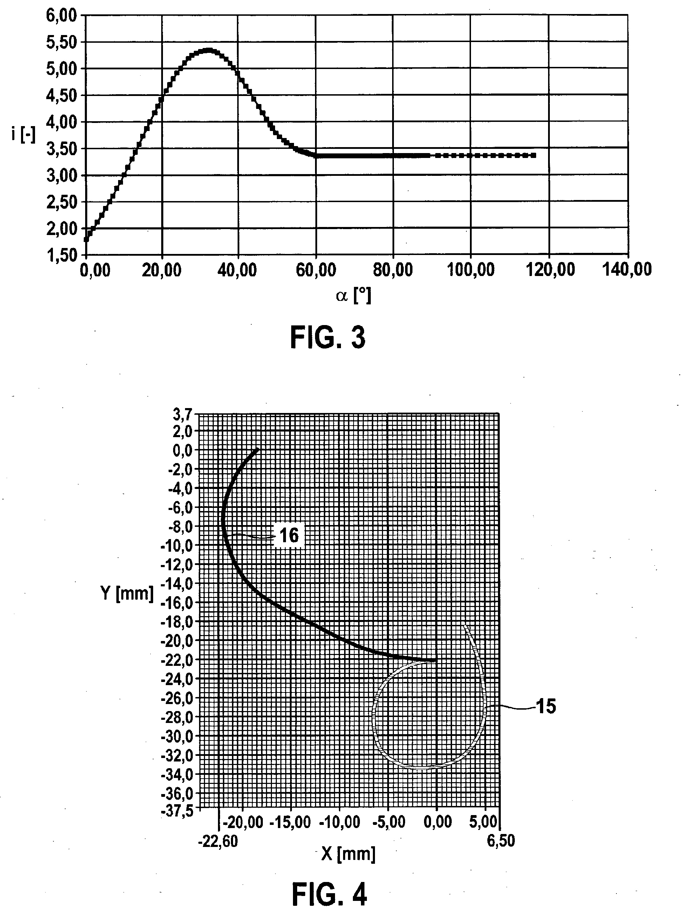

Die Funktionsweise des Getriebes 11 wird anhand der Figuren 3 bis 4 verdeutlicht. In diesen ist jeweils eine weitere Ausführungsform des Getriebes 11 in unterschiedlichen Drehwinkelstellungen dargestellt. In der Figur 2 liegt das Antriebsrad 12 beziehungsweise das Abtriebsrad 13 in einer Drehwinkelstellung vor, welche einer Offenstellung des Wastegates beziehungsweise der Verstelleinrichtung entspricht. Diese Drehwinkelstellung stellt eine erste Enddrehwinkelstellung dar. Dabei ist die nicht dargestellte Antriebsschwinge 3 des ViergelenkKoppelgetriebes 2 entfernt von ihrer Strecklage angeordnet.

In der Figur 2 sind Wälzkurvenradien r₁, r₂ sowie r₃ des Antriebsrads 12 und Wälzkurvenradien r'₁, r'₂ und r'₃ des Abtriebsrads 13 angedeutet. Auf diese Weise kann jeder Drehwinkelstellung des Antriebsrads 12 und/oder des Abtriebsrads 13 eine bestimmte Übersetzung des Getriebes 11 zugeordnet werden. Im Bereich der Radien r₁ und r'₁ liegt eine dritte Übersetzung des Getriebes 11, im Bereich der Radien r₂ und r'₂ eine zweite Übersetzung und im Bereich der Radien r₃ und r'₃ eine erste Übersetzung vor. Es ist ohne Weiteres erkennbar, dass r₁ größer r₂, r₂ kleiner r₃ und r₃ größer r₁ gilt. Ebenso ist vorgesehen, dass r'₁ kleiner r'₂, r'₂ größer als r'₃ und r'₃ kleiner als r'₁ ist. Daraus ergibt sich, dass die dritte Übersetzung kleiner ist als die zweite Übersetzung, während die erste Übersetzung sowohl kleiner als die dritte als auch die zweite Übersetzung ist. In der Figur 2 nehmen das Antriebsrad 12 und das Abtriebsrad 13 eine Drehwinkelstellung ein, in welcher das Viergelenk-Koppelgetriebe 2 von seiner Strecklage abweicht. Das bedeutet, dass die erste Übersetzung in einem Drehwinkelbereich um diese Strecklage herum vorliegt, während die zweite und die dritte Übersetzung außerhalb des Drehwinkelbereichs vorliegen. Auf diese Weise wird erreicht, dass im Bereich der Strecklage des Viergelenk-Koppelgetriebes 2 die auf die Koppel 5 aufgebrachte Verstellkraft beziehungsweise das in die Antriebsschwinge 3 eingeleitete Drehmoment verringert wird.

Dies ist in dem Diagramm der Figur 3 dargestellt. In dem Diagramm ist die Übersetzung i des Getriebes 11 über der Drehwinkelstellung α des Abtriebsrads 13, welche in Grad angegeben ist, aufgetragen. Dabei entspricht eine Drehwinkelstellung von α = 0° der Strecklage des Viergelenk-Koppelgetriebes 2. Für die Drehwinkelstellung α = 0° liegt demnach die erste Übersetzung vor, welche in diesem Fall eine Minimalübersetzung ist. Ausgehend von der ersten Übersetzung steigt die Übersetzung des Getriebes mit wachsender Drehwinkelstellung α an, bis bei einer Drehwinkelstellung von etwa α = 32° die zweite Übersetzung erreicht ist, welche der Maximalübersetzung des Getriebes 11 entspricht. Bei weiter steigender Drehwinkelstellung α fällt die Übersetzung wieder ab, bis die dritte Übersetzung bei etwa α = 62° erreicht ist. Nachfolgend verbleibt die Übersetzung auch bei weiter wachsender Drehwinkelstellung konstant auf dem Wert der dritten Übersetzung.

Die Figur 4 zeigt ein Diagramm, in welchem die Wälzkurve 15 des Antriebsrads 12 und die Wälzkurve 16 des Abtriebsrads 13 nochmals dargestellt sind. Das Diagramm zeigt dabei eine Koordinate y über einer Koordinate x, welche beide in mm angegeben sind. Bei einem Punkt (0; 0) des Diagramms befindet sich ein Drehpunkt des Abtriebsrad 13, also die Lagerstelle 6. Ein Drehpunkts des Antriebsrads 12 befindet sich dagegen bei (0; -28), was der Lagerstelle 17 entspricht.

## Patentansprüche

1. Getriebeanordnung (1) für eine Verstelleinrichtung, insbesondere eines Wastegates eines Abgasturboladers, mit einem Viergelenk-Koppelgetriebe (2), welches über eine über ein Getriebe (11) mit einem Antrieb wirkverbundene Antriebsschwinge (3), eine Abtriebsschwinge (4) und eine die Antriebsschwinge (3) und die Abtriebsschwinge (4) wirkverbindende Koppel (5) verfügt, wobei das Getriebe (11) ein dem Antrieb zugeordnetes Antriebsrad (12) und ein der Antriebsschwinge (3) zugeordnetes, mit dem Antriebsrad (12) zusammenwirkendes Abtriebsrad (13) aufweist, **dadurch gekennzeichnet, dass** das Antriebsrad (12) einen sich über den Umfang ändernden Wälzkurvenradius (r₁,r₂,r₃) und das Abtriebsrad (13) einen zu diesem komplementär verlaufenden Wälzkurvenradius (r'₁,r'₂,r'₃) aufweisen, wobei die Wälzkurvenradien (r₁,r₂,r₃;r'₁,r'₂,r'₃) in einem Drehwinkelbereich um die Strecklage des Viergelenk-Koppelgetriebes (2) zumindest bereichsweise zur Ausbildung einer ersten Übersetzung des Getriebes (11) und außerhalb des Drehwinkelbereichs zur Ausbildung mindestens einer zweiten, zur ersten Übersetzung größeren Übersetzung gewählt sind.

2. Getriebeanordnung nach Anspruch 1, **dadurch gekennzeichnet, dass** das Antriebsrad (12) und das Abtriebsrad (13) als Zahnräder (14) ausgebildet sind.

3. Getriebeanordnung nach einem oder mehreren der vorhergehenden Ansprüche, **dadurch gekennzeichnet, dass** die Wälzkurvenradien (r₁,r₂,r₃;r'₁,r'₂,r'₃) derart gewählt sind, dass für jede Drehwinkelstellung des Antriebsrads (12) und/oder Abtriebsrads (13) eine bestimmte Übersetzung des Getriebes (11) vorliegt und/oder bei einem bestimmten, mit dem Antrieb erzeugten Antriebsmoment ein bestimmtes Stellmoment an der Abtriebsschwinge (4) erzielbar ist.

4. Getriebeanordnung nach einem oder mehreren der vorhergehenden Ansprüche, **dadurch gekennzeichnet, dass** das Antriebsrad (12) und/oder das Abtriebsrad (13) einen Wälzwinkel von kleiner als oder gleich 360° aufweisen.

5. Getriebeanordnung nach einem oder mehreren der vorhergehenden Ansprüche, **dadurch gekennzeichnet, dass** die erste Übersetzung eine Minimalübersetzung ist.

6. Getriebeanordnung nach einem oder mehreren der vorhergehenden Ansprüche, **dadurch gekennzeichnet, dass** außerhalb des Drehwinkelbereichs eine dritte Übersetzung vorgesehen ist, welche kleiner als die zweite Übersetzung ist.

7. Getriebeanordnung nach einem oder mehreren der vorhergehenden Ansprüche, **dadurch gekennzeichnet, dass** die Antriebsschwinge (3) drehfest mit dem Abtriebsrad (13) verbunden und insbesondere mit diesem in einem gemeinsamen Lager gelagert ist.

8. Getriebeanordnung nach einem oder mehreren der vorhergehenden Ansprüche, **dadurch gekennzeichnet, dass** die Antriebsschwinge (3) und das Abtriebsrad (13) einteilig ausgeführt sind.

9. Abgasturbolader mit einem Wastegate und einer Verstelleinrichtung zum Verstellen des Wastegates, wobei die Verstelleinrichtung eine Getriebeanordnung (1), insbesondere nach einem oder mehreren der vorhergehenden Ansprüche, mit einem Viergelenk-Koppelgetriebe (2) aufweist, wobei das Viergelenk-Koppelgetriebe (2) über eine über ein Getriebe (11) mit einem Antrieb wirkverbundene Antriebsschwinge (3), eine Abtriebsschwinge (4) und eine die Antriebsschwinge (3) und die Abtriebsschwinge (4) wirkverbindende Koppel (5) verfügt, wobei das Getriebe (11) ein dem Antrieb zugeordnetes Antriebsrad (12) und ein der Antriebsschwinge (3) zugeordnetes, mit dem Antriebsrad (12) zusammenwirkendes Abtriebsrad (13) aufweist, **dadurch gekennzeichnet, dass** das Antriebsrad (12) einen sich über den Umfang ändernden Wälzkurvenradius (r₁,r₂,r₃) und das Abtriebsrad (13) einen zu diesem komplementär verlaufenden Wälzkurvenradius (r'₁,r'₂,r'₃) aufweisen, wobei die Wälzkurvenradien (r₁,r₂,r₃;r'₁,r'₂,r'₃) in einem Drehwinkelbereich um die Strecklage des Viergelenk-Koppelgetriebes (2) zumindest bereichsweise zur Ausbildung einer ersten Übersetzung des Getriebes (11) und außerhalb des Drehwinkelbereichs zur Ausbildung mindestens einer zweiten, zur ersten Übersetzung größeren Übersetzung gewählt sind.

10. Abgasturbolader nach einem oder mehreren der vorhergehenden Ansprüche, **dadurch gekennzeichnet, dass** der Antrieb an einem Verdichtergehäuse des Abgasturboladers und das Wastegate an einem Turbinengehäuse des Abgasturboladers vorgesehen sind.

## Claims

1. Gear mechanism arrangement (1) for an adjustment device, in particular of a wastegate of an exhaust-gas turbocharger, having a four-joint coupling gear mechanism (2) which has a driving link (3) operatively connected to a drive via a gear mechanism (11), has an output link (4), and has a coupler (5) that operatively connects the driving link (3) and the output link (4), the gear mechanism (11) having a driving gear (12) assigned to the drive and having an output gear (13) which is assigned to the driving link (3) and which interacts with the driving gear (12), **characterized in that** the driving gear (12) has a pitch curve radius (r₁, r₂, r₃) that varies over the circumference and the output gear (13) has a pitch curve radius (r'₁, r'₂, r'₃) that runs in complementary fashion to the former pitch curve radius, wherein the pitch curve radii (r₁, r₂, r₃; r'₁, r'₂, r'₃) are selected, in a rotational angle range around the stretched position of the four-joint coupling gear mechanism (2), so as to form a first transmission ratio of the gear mechanism (11) at least regionally and, outside the rotational angle range, so as to form at least one second transmission ratio that is higher than the first transmission ratio.

2. Gear mechanism arrangement according to Claim 1, **characterized in that** the driving gear (12) and the output gear (13) are in the form of gearwheels (14).

3. Gear mechanism arrangement according to one or more of the preceding claims, **characterized in that** the pitch curve radii (r₁, r₂, r₃; r'₁, r'₂, r'₃) are selected such that, for every rotational angle position of the driving gear (12) and/or of the output gear (13), a particular transmission ratio of the gear mechanism (11) exists and/or a particular actuating torque can be obtained at the output link (4) in the presence of a particular drive torque generated by the drive.

4. Gear mechanism arrangement according to one or more of the preceding claims, **characterized in that** the driving gear (12) and/or the output gear (13) have a rolling angle of less than or equal to 360°.

5. Gear mechanism arrangement according to one or more of the preceding claims, **characterized in that** the first transmission ratio is a minimum transmission ratio.

6. Gear mechanism arrangement according to one or more of the preceding claims, **characterized in that**, outside the rotational angle range, a third transmission ratio is provided which is less than the second transmission ratio.

7. Gear mechanism arrangement according to one or more of the preceding claims, **characterized in that** the driving link (3) is connected rotationally conjointly to the output gear (13) and in particular is mounted with the latter in a common bearing.

8. Gear mechanism arrangement according to one or more of the preceding claims, **characterized in that** the driving link (3) and the output gear (13) are formed in one piece.

9. Exhaust-gas turbocharger having a wastegate and having an adjustment device for adjusting the wastegate, wherein the adjustment device has a gear mechanism arrangement (1), in particular according to one or more of the preceding claims, having a four-joint coupling gear mechanism (2), wherein the four-joint coupling gear mechanism (2) has a driving link (3) operatively connected to a drive via a gear mechanism (11), has an output link (4), and has a coupler (5) that operatively connects the driving link (3) and the output link (4), the gear mechanism (11) having a driving gear (12) assigned to the drive and having an output gear (13) which is assigned to the driving link (3) and which interacts with the driving gear (12), **characterized in that** the driving gear (12) has a pitch curve radius (r₁, r₂, r₃) that varies over the circumference and the output gear (13) has a pitch curve radius (r'₁, r'₂, r'₃) that runs in complementary fashion to the former pitch curve radius, wherein the pitch curve radii (r₁, r₂, r₃; r'₁, r'₂, r'₃) are selected, in a rotational angle range around the stretched position of the four-joint coupling gear mechanism (2), so as to form a first transmission ratio of the gear mechanism (11) at least regionally and, outside the rotational angle range, so as to form at least one second transmission ratio that is higher than the first transmission ratio.

10. Exhaust-gas turbocharger according to one or more of the preceding claims, **characterized in that** the drive is provided on a compressor housing of the exhaust-gas turbocharger and the wastegate is provided on a turbine housing of the exhaust-gas turbocharger.

## Revendications

1. Agencement de transmission (1) pour un dispositif de réglage, en particulier d'une soupape de décharge d'un turbocompresseur à gaz d'échappement, comprenant un mécanisme d'accouplement à quadrilatère articulé (2), lequel dispose d'un bras oscillant d'entraînement (3) en liaison fonctionnelle avec un entraînement par le biais d'une transmission (11), d'un bras oscillant de sortie (4) et d'une bielle (5) reliant fonctionnellement le bras oscillant d'entraînement (3) et le bras oscillant de sortie (4), la transmission (11) comprenant une roue d'entraînement (12) associée à l'entraînement et une roue de sortie (13) associée au bras oscillant d'entraînement (3) et coopérant avec la roue d'entraînement (12), **caractérisé en ce que** la roue d'entraînement (12) présente un rayon de courbure de roulement (r₁, r₂, r₃) variant sur la périphérie et la roue de sortie (13) présente un rayon de courbure de roulement (r'₁, r'₂, r'₃) s'étendant de manière complémentaire à celui-ci, les rayons de courbure de roulement (r₁, r₂, r₃ ; r'₁, r'₂, r'₃) étant sélectionnés dans une plage angulaire de rotation autour de la position d'extension du mécanisme d'accouplement à quadrilatère articulé (2) au moins en partie pour réaliser une première démultiplication de la transmission (11) et en dehors de la plage angulaire de rotation pour réaliser au moins une deuxième démultiplication plus grande que la première démultiplication.

2. Agencement de transmission selon la revendication 1, **caractérisé en ce que** la roue d'entraînement (12) et la roue de sortie (13) sont réalisées sous forme de roues dentées (14).

3. Agencement de transmission selon l'une quelconque ou plusieurs des revendications précédentes, **caractérisé en ce que** les rayons de courbure de roulement (r₁, r₂, r₃ ; r'₁, r'₂, r'₃) sont sélectionnés de telle sorte qu'il existe une démultiplication déterminée de la transmission (11) pour chaque position angulaire de rotation de la roue d'entraînement (12) et/ou de la roue de sortie (13), et/ou qu'en cas de moment d'entraînement déterminé généré par l'entraînement, un moment de réglage déterminé puisse être obtenu au niveau du bras oscillant de sortie (4).

4. Agencement de transmission selon l'une quelconque ou plusieurs des revendications précédentes, **caractérisé en ce que** la roue d'entraînement (12) et/ou la roue de sortie (13) présente(nt) un angle de roulement inférieur ou égal à 360°.

5. Agencement de transmission selon l'une quelconque ou plusieurs des revendications précédentes, **caractérisé en ce que** la première démultiplication est une démultiplication minimale.

6. Agencement de transmission selon l'une quelconque ou plusieurs des revendications précédentes, **caractérisé en ce qu'**une troisième démultiplication est prévue en dehors de la plage angulaire de rotation, laquelle troisième démultiplication est inférieure à la deuxième démultiplication.

7. Agencement de transmission selon l'une quelconque ou plusieurs des revendications précédentes, **caractérisé en ce que** le bras oscillant d'entraînement (3) est relié de manière solidaire en rotation à la roue de sortie (13) et est en particulier monté avec celle-ci dans un palier commun.

8. Agencement de transmission selon l'une quelconque ou plusieurs des revendications précédentes, **caractérisé en ce que** le bras oscillant d'entraînement (3) et la roue de sortie (13) sont réalisés d'un seul tenant.

9. Turbocompresseur à gaz d'échappement comprenant une soupape de décharge et un dispositif de réglage pour régler la soupape de décharge, le dispositif de réglage comprenant un agencement de transmission (1), en particulier selon l'une quelconque ou plusieurs des revendications précédentes, comprenant un mécanisme d'accouplement à quadrilatère articulé (2), le mécanisme d'accouplement à quadrilatère articulé (2) disposant d'un bras oscillant d'entraînement (3) en liaison fonctionnelle avec un entraînement par le biais d'une transmission (11), d'un bras oscillant de sortie (4) et d'une bielle (5) reliant fonctionnellement le bras oscillant d'entraînement (3) et le bras oscillant de sortie (4), la transmission (11) comprenant une roue d'entraînement (12) associée à l'entraînement et une roue de sortie (13) associée au bras oscillant d'entraînement (3) et coopérant avec la roue d'entraînement (12), **caractérisé en ce que** la roue d'entraînement (12) présente un rayon de courbure de roulement (r₁, r₂, r₃) variant sur la périphérie et la roue de sortie (13) présente un rayon de courbure de roulement (r'₁, r'₂, r'₃) s'étendant de manière complémentaire à celui-ci, les rayons de courbure de roulement (r₁, r₂, r₃ ; r'₁, r'₂, r'₃) étant sélectionnés dans une plage angulaire de rotation autour de la position d'extension du mécanisme d'accouplement à quadrilatère articulé (2) au moins en partie pour réaliser une première démultiplication de la transmission (11) et en dehors de la plage angulaire de rotation pour réaliser au moins une deuxième démultiplication plus grande que la première démultiplication.

10. Turbocompresseur à gaz d'échappement selon l'une quelconque ou plusieurs des revendications précédentes, **caractérisé en ce que** l'entraînement est prévu sur un carter de compresseur du turbocompresseur à gaz d'échappement et la soupape de décharge est prévue sur un carter de turbine du turbocompresseur à gaz d'échappement.
